# FASCICULE DE BREVET EUROPEEN

(11) **EP 0 453 358 B1**
(45) Date de publication et mention de la délivrance du brevet: **15.02.1995**
(21) Numéro de dépôt: 91400994.9
(22) Date de dépôt: 15.04.1991
(51) Int. Cl.: B09B 1/00

(54) **Dispositif de captation et d'évacuation de gaz de fermentation émanant, en particulier d'ordures ménagères déchargées et tassées par couches dans une fosse à décharge**
Vorrichtung zum Sammeln und Abführen von Gärungsgasen, insbesondere aus dem in Schichten in einer Müllgrube deponierten und verfestigten Hausmüll
Device for collecting and evacuating fermentation gases, emanating in particular from municipal waste, dumped and layered in a refuse-pit

(30) Priorité: 17.04.1990 FR 9004911
(43) Date de publication de la demande: 23.10.1991
(73) Titulaire: CERCHIMIE, F-92022 Nanterre Cedex (FR)
(72) Inventeur: Bergonzo, Maurice, Les Gemeaux 5163, F-92400 Courbevoie (FR); Fettre, Michel, F-92300 Levallois-Perret (FR)
(74) Mandataire: Phélip, Bruno

(56) Documents cités:
- DE-A- 3 109 120
- FR-A- 786 298
- US-A- 2 439 067
- US-A- 4 687 372
- US-A- 4 838 733

## Description

La présente invention est relative à un dispositif de captation et d'évacuation de gaz de fermentation émanant de déchets, tels que des ordures ménagères déchargées par couches successives dans une fosse ouverte prévue à cet effet.

Les ordures ménagères, lorsqu'elles ne sont pas détruites par incinération ou récupérées, sont généralement stockées dans des fosses à décharge. Ces fosses à décharges peuvent être par exemple des alvéoles d'argile que l'on remplit au fur et à mesure, puis que l'on recouvre, de façon cyclique, en surface, par des couches de terre (argile, terre végétale ou tout autre remblai), ces couches de terre étant le plus souvent tassées au rouleau compresseur.

L'environnement devenant un sujet de plus en plus sensible pour l'opinion publique, on a été amené à aménager des décharges avec des dispositifs de captation des gaz de fermentation des ordures ménagères. Ces gaz de fermentation sont désormais brûlés, pour éviter toute nuisance dans le voisinage de ces décharges. On utilise pour ce faire des dispositifs comportant essentiellement des puits de captation des émanations gazeuses provenant du tas d'ordures, ces puits de captation étant reliés par des tuyauteries d'aspiration à un collecteur de bio-gaz se trouvant sur la terre d'argile bordant la fosse de décharge et à partir duquel le gaz est transporté jusqu'à une brûlerie ou torchère. Ces tuyauteries d'aspiration ou gaines de raccordement appelées "drains" sont généralement enfoncées à quelques dizaines de centimètres au-dessous de la surface du tas d'ordures (drains enterrés) ou posés à même ladite surface (drains de surfaces).

Dans le cas des drains enterrés il a été constaté que les tuyauteries étaient mécaniquement fort sollicitées au cours de la dégradation des ordures, étant donné que pendant la durée de vie active du tas d'ordures, le niveau de ce dernier est en abaissement constant, phénomène qui se trouve aggravé par le dépôt précité de couches de terre, ainsi que par les passages du rouleau compresseur. C'est à cet effet qu'ont été prévues, dans la plupart de ces dispositifs, des liaisons flexibles entre le drain, d'une part, et le puits et le collecteur, d'autre part.

Ces déplacements et sollicitations engendrent au niveau du drain des cassures et fissures, qui rendent totalement inefficaces toute l'installation de captation. Les gaz de fermentation ne sont plus aspirés au niveau du puits, la pompe d'aspiration aspirant, quant à elle, essentiellement des gaz de surface et de l'air, par l'intermédiaire des prises que constituent ces fissures ou ces cassures. C'est pourquoi les dispositifs actuels sont très peu fiables, alors qu'ils nécessitent au départ un investissement important.

Quant aux drains de surface, ils posent d'énormes problèmes d'exploitation, puisqu'il est nécessaire de les démonter et de les remonter à chaque opération de remblaiement en terre, ou à chaque fois que l'on veut faire passer un véhicule, tel qu'un rouleau compresseur, sur la décharge.

A titre de document illustratif de la technique antérieure, on peut citer le brevet DE-A-3.109.120. Ce document concerne un dispositif d'évacuation des gaz de fermentation d'ordures ménagères, qui est associé à une fosse émanant d'ordures constituée par une enceinte fermée. Les drains sont rigides et ne sont pas disposés en hauteur. Il s'agit donc d'une installation appliquant une technique de stockage en enceinte fermée, qui ne nécessite aucun passage d'engins pour le compactage des couches successives d'ordures, comme cela est pratiqué si le stockage est réalisé dans un trou ouvert.

Un autre document illustratif est le brevet US-A-4.838.733 qui propose d'évacuer les gaz de fermentation dans des drains aériens et souples. Toutefois la technique décrite n'est pas adaptée à un stockage d'ordures ménagères par couches successives. Le système d'évacuation est mis en place lorsque le trou a été rempli d'ordures. Le niveau de celles-ci baisse au fur et à mesure de la fermentation sans que le système de portage des drains puisse accompagner l'affaissement du tas d'ordures. En fait la technique décrite dans le brevet US-4.838.733 permet de traiter un tas d'ordures constitué une fois pour toute dans un trou servant de stockage et le système de drainage proposé ne permettrait pas la circulation d'engins de chantier, tels que des rouleaux de compactage, qui sont nécessaires dans une technique de stockage par couches successives. Cette dernière forme de technique à laquelle appartient la présente invention, procure les résultats les meilleurs, car elle permet d'introduire le volume maximal d'ordures dans un trou de stockage de capacité donnée.

La présente invention a pour but de pallier les inconvénients de la technique connue, tels qu'ils ont été brièvement rappelés ci-dessus. Elle propose notamment un dispositif de captation des gaz de fermentation très fiable et qui n'entrave en aucune manière l'exploitation de la décharge.

La présente invention a donc pour objet un dispositif de captation et d'évacuation des gaz de fermentation émanant de déchets tels que des ordures ménagères déchargées par couches successives dans une fosse ouverte prévue à cet effet, ce dispositif comportant, au sein du tas d'ordures, un puits qui sert d'organe de captation desdits gaz de fermentation, et une tuyauterie formant drain qui relie ledit puits à un collecteur de gaz disposé sur le bord de la fosse, vers lequel lesdits gaz de fermentation sont évacués par aspiration, ladite tuyauterie étant une tuyauterie aérienne apte à accompagner les variations éventuelles de la position dudit puits de captation par rapport au niveau du tas d'ordures, et étant séparée de la surface externe du tas d'ordures par une hauteur suffisante pour permettre le passage d'un engin de travail destiné à passer sur ces ordures pour les tasser.

Ainsi l'invention utilise un drain aérien entre le puits de captation et le collecteur. Une telle liaison aérienne permet d'assurer un service au sol par les engins, sans risque pour le drain. En outre, ce drain déterré n'est plus soumis à aucune sollicitation, lorsqu'on remblaie la fosse avec des couches de terre. Enfin, ce drain aérien est, par nature, beaucoup plus accessible qu'un drain enterré, ce qui permet une surveillance constante, en cours de fonctionnement, et facilite les réparations éventuelles.

Plus particulièrement, selon l'invention le dispositif de liaison aérienne entre un point fixe (le collecteur sur le bord de la fosse) et un point variable en niveau (le puits de captation, destiné à s'affaisser au cours du temps), comporte une poutre soutenue par des supports, ladite poutre étant destinée à porter une tuyauterie avec laquelle elle peut être éventuellement confondue sur tout ou partie, et admettant un certain débattement angulaire par rapport auxdits supports, de façon à ce que la baisse de niveau de l'un des supports, lié par exemple à l'affaissement du tas d'ordures sur lequel il est en appui, soit accompagnée par une inclinaison de la poutre, sans risque d'effort interne pour ladite poutre.

On notera qu'un tel dispositif aérien a une structure très simple, avantageusement modulaire, et présente également l'avantage de pouvoir être récupéré une fois l'exploitation de la fosse terminée, c'est-à-dire une fois que la décharge d'ordures dont ladite fosse a été remplie s'est stabilisée en niveau (environ cinq années). En particulier, si les fosses sont réparties de chaque côté d'une même digue, sur laquelle sont situés les collecteurs, il suffit de faire pivoter l'ensemble du dispositif autour de son support fixe sur ladite digue et de le remettre en fonctionnement sur la fosse de l'autre côté de la première fosse par rapport à la digue.

De plus, dans le cas de bouchages éventuels du tuyau de captation au sein du tas d'ordures (phénomène constaté dans les exploitations), le système permet de créer de nouveaux puits de captation par simple rotation autour du poteau fixe support.

Avantageusement, la tuyauterie formant drain est portée par au moins deux supports dont l'un au moins est porté par une semelle disposée sur ou à l'intérieur du tas d'ordures et accompagnant ce dernier dans son affaissement.

De préférence, ce dispositif comporte un élément poutre porté au moins par lesdits deux supports répartis sur sa longueur et solidaires chacun de moyens d'attache, maintenant au moins partiellement ladite poutre en niveau par rapport auxdits supports, ladite poutre portant, sur au moins une partie de sa longueur entre lesdits supports, la tuyauterie d'évacuation, les moyens d'attache autorisant un déplacement angulaire de ladite poutre par rapport auxdits supports, ainsi qu'un coulissement axial de ladite poutre par rapport à au moins l'un desdits supports.

Avantageusement, les moyens d'attache associés à un support comportent au moins une poulie portant tangentiellement ladite poutre. Les moyens d'attache associés à un support monté sur le bord de la fosse peuvent notamment comporter deux poulies d'axes sensiblement parallèles et entre lesquels s'étend une poutre, ladite poutre étant tangentiellement en contact avec chacune de ces poulies, celle de ces deux poulies qui est au-dessus de l'autre pouvant coulisser le long du support, autorisant ainsi la libre pente de la poutre, les moyens d'attache associés à un support porté par une semelle accompagnant le tas d'ordures dans son affaissement, comportant uniquement une poulie portant tangentiellement ladite poutre.

Préférentiellement, les moyens d'attache autorisent un coulissement axial de la poutre par rapport à chacun desdits supports. Le dispositif comporte des moyens de retenue, destinés à limiter ou empêcher le coulissement axial de la poutre par rapport aux deux supports sous l'effet de son propre poids et/ou à limiter la flèche de la poutre. Les moyens de retenue comportent au moins un câble, en tension entre les deux supports et au moins un organe de liaison solidaire de la poutre, ledit câble étant retenu sur au moins l'un des deux supports par un tendeur de câble. L'organe de liaison comprend une poulie montée pivotante sur un étrier solidaire de la poutre. Les moyens de retenue peuvent notamment comporter plusieurs câbles associés chacun à un organe de liaison, chaque câble étant en tension entre les deux supports et l'organe de liaison auquel il est associé.

De façon avantageuse, les moyens d'attache sont réglables en niveau par rapport au support auquel ils sont associés. Les supports sont, sur au moins une de leurs parties, des poteaux associés à des manchons de réglage en niveau des moyens d'attache.

De préférence, la tuyauterie est associée vers une de ses extrémités à un tube d'entrée du fluide et de gaz relié au puits de captation et vers son autre extrémité à un tube de sortie, un tube d'entrée et/ou de sortie étant un tube souple apte à accompagner par ses déformations le mouvement éventuel de la poutre par rapport à ses supports. Un tube souple est au moins partiellement enroulé sur lui-même, éventuellement enfermé dans un carter de protection, selon une spirale dont la hauteur peut être déformée.

Préférentiellement encore, la poutre est confondue, sur tout ou partie de sa longueur, avec la tuyauterie.

La tuyauterie est par exemple en polyester armé, en polyéthylène haute densité ou tout matériau présentant les caractéristiques mécaniques et chimiques en accord avec le fluide véhiculé et les portées nécessaires.

D'autres caractéristiques et avantages de l'invention ressortiront encore de la description qui va suivre et qui ne présente aucun caractère limitatif. Cette description doit être lue en regard des dessins annexés, sur lesquels:
La Figure 1 est une vue en coupe d'un dispositif conforme à l'invention de captation des gaz de fermentation dans une fosse à décharge d'ordures ménagères, ce dispositif ayant été représenté selon deux positions différentes;
La Figure 2 est une vue de dessus d'un ensemble de fosses à décharge d'ordures ménagères, ces différentes fosses étant associées à un même collecteur de gaz de fermentation, chacune de ces fosses étant associée à au moins un dispositif conforme à celui de la Figure 1.
La Figure 3 est une vue d'un détail du dispositif de la Figure 1.
La Figure 4 est une vue en coupe selon la ligne IV-IV de la Figure 1.
La Figure 5 est une vue semblable à celle de la Figure 1 d'un dispositif de captation des gaz de fermentation conforme à un deuxième mode de réalisation de l'invention.
La Figure 6 est une vue en plan selon la ligne VI-VI de la Figure 5.

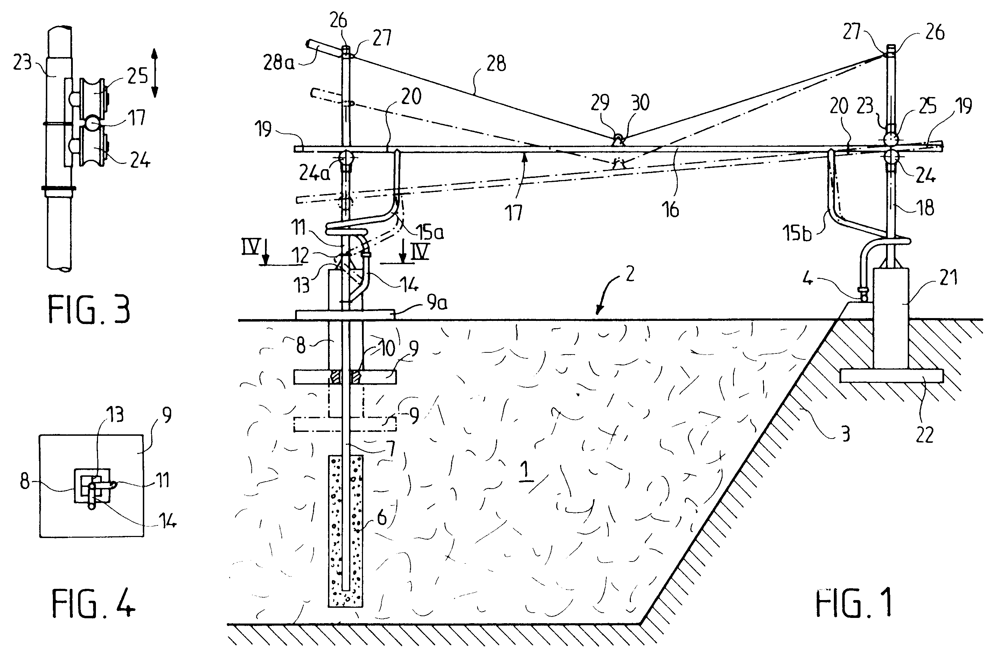

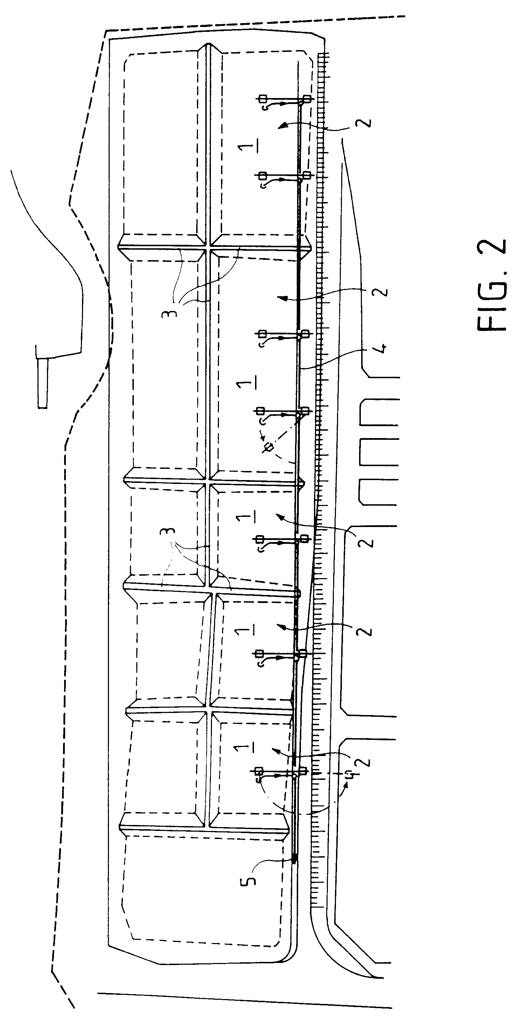

Aux Figures 1 et 2, la référence 1 désigne des tas d'ordures ménagères déchargés dans des fosses 2, qui sont des alvéoles d'argile délimitées latéralement par des digues 3.

Le dispositif de captation des gaz représenté sur lesdites figures comporte le long d'une digue 3, qui borde toute une série de fosses 2, un conduit collecteur 4. Ce conduit collecteur 4 est associé à un ventilateur (non représenté), destiné à aspirer les gaz de fermentation dans lesdits conduits collecteurs 4, jusqu'à la torche d'une brûlerie 5.

Chacune des fosses de décharge 2 est, selon sa superficie, associée à un ou plusieurs puits de captation 6. Chaque puits 6 est un lit de cailloux, sensiblement cylindrique, qui se trouve enfoui en profondeur au sein du tas d'ordures 1, de préférence vers la partie centrale de celui-ci, et qui est disposé de façon à ce que son axe soit sensiblement perpendiculaire au fond de la fosse 2 à laquelle il est associé. Chaque puits 6 est associé à un drain 7 s'étendant axialement de l'intérieur dudit puits 6, jusqu'au-delà de la surface du tas 1 correspondant. Un drain 7 est un tube creux d'un diamètre environ égal à 20 cm et est solidaire d'un montant 8, qu'il traverse axialement, ledit montant 8 ayant une forme parallélépipèdique à base carrée et s'étendant au moins en partie dans le tas d'ordures ménagères 1. Ledit montant 8 s'appuie dans le tas 1 par l'intermédiaire d'une semelle 9, qui le termine à son extrémité à l'intérieur dudit tas 1. Cette semelle 9 est une plaque de section carrée, axée sur l'axe du drain 7 qui la traverse en un alésage 10 prévu à cet effet, les bords de ladite semelle 9 étant parallèles aux bords de la section droite du montant 8. Le montant 8 est en outre aussi maintenu en place par rapport au tas 1 par l'intermédiaire d'une semelle de surface 9a montée sur sa partie médiane et sensiblement identique à la semelle 9.

Le drain 7 se prolonge, au-delà du montant 8, par une partie 11 formant poteau d'une hauteur égale à environ 9 m. Le drain 7 et ladite partie formant poteau 11 sont deux parties d'un même tube séparées entre elles par un dispositif d'étanchéité 12 destiné à éviter les entrées d'air parasites. A son extrémité opposée à la semelle 9, le montant 8 est prolongé par quatre nervures radiales de rigidification 13 réparties régulièrement autour du drain 7, qui s'étendent parallèlement aux faces longitudinales du montant 8 et selon une forme triangulaire, de leur base au niveau de la surface d'extrémité du montant 8 jusqu'à leur sommet, qui se trouve sur le drain 7 juste avant le dispositif d'étanchéité 12.

Le drain 7 est en outre associé à un tube de dérivation 14, qui s'étend dudit drain 7, dans une partie de celui-ci au niveau du montant 8, à travers ledit montant 8, puis le long de celui-ci, ce tube de dérivation 14 se prolongeant au-delà dudit montant 8, par un tube flexible 15a enroulé en spirale autour de la partie formant poteau 11. Ce tube flexible 15a débouche, à son extrémité la plus éloignée du tube de dérivation 14, dans une tuyauterie 16 cylindrique, par exemple en polyester armé.

Cette tuyauterie 16 joue également le rôle d'une poutre creuse, référencée par 17 dans son ensemble, et s'étendant de (et au-delà de) ladite partie 11 formant poteau jusqu'à un poteau 18 porté par la digue 3. Les axes de la partie 11 et du poteau 18 sont séparés entre eux par une distance de 15 m, la longueur de la poutre 17 étant environ égale à 18 m. L'axe de la poutre 17 se trouve à une distance d'environ 3m du dispositif d'étanchéité 12. La poutre 17 se prolonge de chaque côté de la tuyauterie 16 par une partie porteuse 19 séparée de ladite tuyauterie 16 par un dispositif d'étanchéité 20, qui est réalisé par l'intermédiaire d'un tampon plein disposé à l'intérieur de ladite poutre creuse 17 et maintenu en place dans celle-ci à l'aide d'une bride serrant ladite poutre 17 sur sa surface externe. La section milieu de la poutre 17 est aussi la section milieu de la tuyauterie 16.

La tuyauterie 16 est reliée, vers son extrémité la plus proche du poteau 18, au collecteur 4 par un tube flexible 15b enroulé en spirale autour du poteau 18.

Le poteau 18 est un tube sensiblement identique au tube du drain 7 et de la partie formant poteau 11. Il est porté par un montant 21 identique au montant 8, ledit montant 21 s'étendant partiellement dans la digue 3, parallèlement au montant 8, et étant disposé à côté du collecteur 4. Ce montant 21 est lui-même porté par une semelle 22 prenant appui dans l'argile constituant la digue 3.

Ainsi qu'on peut le voir plus particulièrement sur la Figure 3, le poteau 18 est associé à un manchon 23 réglable en niveau et portant deux poulies 24, 25, dont les axes sont perpendiculaires à l'axe dudit manchon 23 et sont répartis dans la longueur de celui-ci. Entre ces deux poulies circulaires 24 et 25, aptes à pivoter sur leurs axes, est passée la poutre 17 dont la surface est tangentiellement en contact avec chacune de ces deux poulies 24 et 25. Ainsi que le schématise la double flèche représentée sur la Figure, la poulie supérieure, référencée par 25, est apte à coulisser librement le long du poteau 18, de façon à autoriser la libre pente de la poutre 17 par rapport audit poteau 18.

Le poteau 11 est quant à lui muni d'un manchon 23 associé à une seule poulie 24a portant la poutre 17. Ces trois poulies 24, 24a et 25 ont des gorges larges de section droite à forme arrondie, ce qui autorise un léger mouvement transversal de la tuyauterie 16 et de la poutre 17, par rapport aux poteaux 11 et 18.

Vers l'extrémité libre des poteaux 11 et 18, s'étend, d'un anneau 27 à un autre, une élingue 28 en tension, reliée à la poutre 17 par l'intermédiaire d'une poulie 29 dans laquelle ladite élingue 28 est passée, ladite poulie 29 étant montée sur un étrier de pivotement 20 solidaire de la poutre 17 au niveau de la partie milieu de celle-ci. Cette élingue 28 est associée, au niveau d'un des anneaux 27, à un tendeur de câble 28a.

En fonctionnement, un ventilateur (non représenté) aspire les gaz de fermentation collectés en profondeur dans chacun des tas 1 par l'intermédiaire des puits de captation 6, vers la torche de la brûlerie 5, à travers le drain 7, le tube de dérivation 14, le tube flexible 15a, la tuyauterie 16, le tube flexible 15b et le collecteur principal 4. Lorsque le tas d'ordures ménagères 1 s'affaisse au cours de sa "vie active", la semelle 9 et le montant 8 sont amenés à baisser de niveau, le dispositif de captation passant, par exemple, si l'on se réfère à la Figure 1, de sa position représentée en traits pleins à sa position représentée en traits mixtes. Le changement de niveau du montant 8 entraîne le coulissement du drain 7 dans le puits 6, de sorte que la partie 11 formant poteau baisse de niveau par rapport au poteau 18. La distance entre les moyens d'attache formés par les poulies 24 et 25 associées au poteau 18 et à la partie 11 formant poteau augmente, les deux parties extrêmes 19 de la poutre 17 coulissant axialement par rapport auxdites poulies 24 et 25, ce que permet le débattement angulaire de ladite poutre 17, dans les poulies 24 et 25, par rapport aux poteaux 11 et 18. Le coulissement éventuel de la poutre 17, sous l'effet de son propre poids, dans les parties 24 et 25 est par ailleurs limité par l'action de rappel de l'élingue 28 sur la poulie 29 et l'étrier 30, qui sert aussi, bien entendu, à éviter que la poutre 17 prenne une flèche sur sa partie médiane. Tandis que la distance entre les deux extrémités du tuyau flexible 15a a elle aussi augmenté, ledit tuyau 15a en spirale s'est déroulé, le tuyau flexible 15b accompagnant le mouvement de la poutre 17.

La liaison aérienne de tuyauterie ainsi réalisée s'adapte donc aux affaissements éventuels du tas d'ordures ménagères 1, ce sans risque d'effort interne pour la tuyauterie de transport 16. Un tel dispositif peut notamment supporter 10 à 15% de pente, ce qui permet dans le cadre des décharges d'ordures ménagères d'attendre un ou deux ans pour remplacer ledit dispositif ou tout simplement le remettre en état de service, par exemple en réhaussant le fourreau 23 associé à la partie 11 formant poteau.

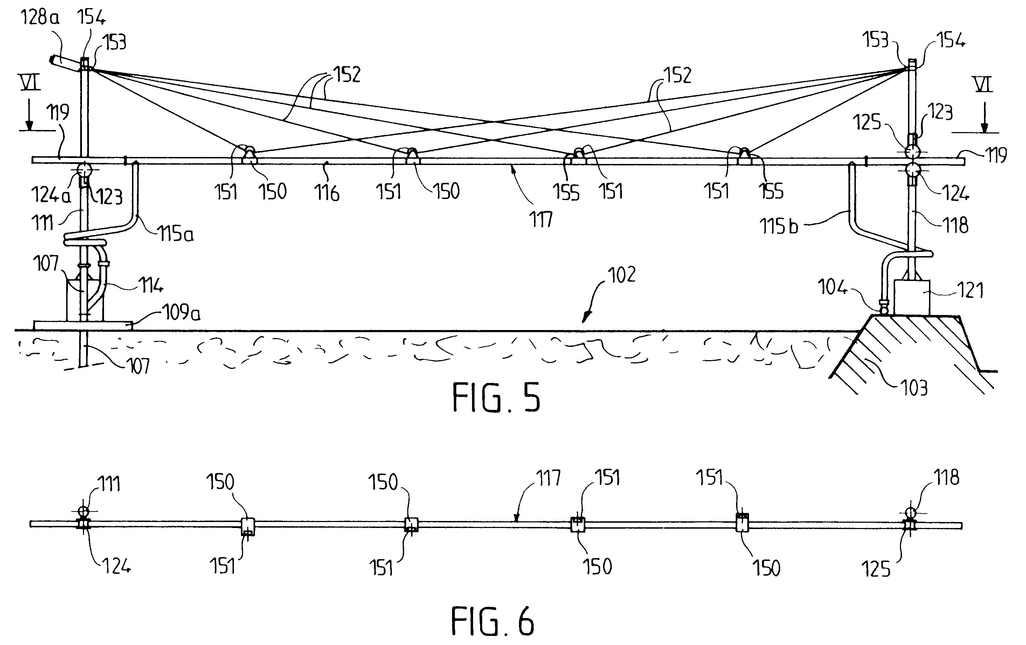

On a représenté sur les Figures 5 et 6 un dispositif conforme à une variante de réalisation possible du dispositif précédemment décrit. Pour les éléments de ce deuxième dispositif qui ont été représentés et que l'on retrouve sur le dispositif conforme au premier mode de réalisation, on a repris les mêmes numérotations de référence augmentées de 100.

Ce dispositif comporte, au sein d'un tas d'ordures ménagères 101, déchargé dans une fosse 102, un puits de captation (non représenté), à l'intérieur duquel plonge un drain 107 relié par un tube de dérivation 114 et un tube flexible 115a à une tuyauterie 116, qui est la partie médiane d'une poutre 117, cette tuyauterie 116 étant reliée, à son extrémité opposée au tube flexible 115a, à un collecteur principal 104, par un deuxième tube flexible 115.

Sur toute la longueur de la poutre 117 sont répartis régulièrement des plateaux 150. Sur chaque plateau 150 est montée une poulie 151 portée par un étrier 155 et dans laquelle est passée une élingue 152 tendue entre les têtes des poteaux 111 et 118, sur lesquelles elle est montée, par l'intermédiaire d'un clip 154 sur lequel est prévu pour chaque élingue 152 un anneau 153. Chacune des poulies 151 est décalée par rapport aux autres, de façon à ce que les élingues 152 s'étendent du poteau 111 au poteau 118 sans interférence les unes avec les autres. Un tel dispositif permet, bien entendu, de réaliser des poutres 117 de plus grande portée.

Il est bien entendu tout à fait envisageable que chacun des deux supports de tels dispositifs soit à niveau variable. En particulier celui des deux supports qui se trouve sur le bord d'argile délimitant la fosse peut être sujet à des variations de niveau, notamment du fait de l'affaissement de l'argile.

On notera également qu'un des avantages importants d'un dispositif de ce type tient en ce que, ainsi que cela a été représenté schématiquement en traits mixtes sur la Figure 2, il peut être pivoté autour du poteau support qui prend appui sur le bord de la fosse 1, de façon, soit à pouvoir être utilisé pour réaliser une captation des gaz de fermentation à partir d'un deuxième puits d'une même fosse 1, si un premier puits de ladite fosse s'avère défaillant, soit à pouvoir être utilisé pour la captation des gaz de fermentation d'une deuxième fosse en regard d'une première fosse, lorsque celle-ci a fini d'être exploitée.

Les signes de référence insérés après les caractéristiques techniques mentionnées dans les revendications, ont pour seul but de faciliter la compréhension de ces dernières, et n'en limitent aucunement la portée.

## Revendications

1. Dispositif de captation et d'évacuation des gaz de fermentation émanant de déchets, tels que des ordures ménagères (1, 101) déchargées par couches successives dans une fosse (2, 102) ouverte prévue à cet effet, ce dispositif comportant, au sein du tas d'ordures, un puits (6) qui sert d'organe de captation desdits gaz de fermentation, et une tuyauterie (17, 118) formant drain qui relie ledit puits (6) à un collecteur de gaz (4, 104) disposé sur le bord de la fosse et vers lequel lesdits gaz de fermentation sont évacués par aspiration, ladite tuyauterie (17, 117) étant une tuyauterie aérienne apte à accompagner les variations éventuelles de la position dudit puits de captation (6) par rapport au niveau dudit tas d'ordures, et étant séparée de la surface externe du tas d'ordures par une hauteur suffisante pour permettre le passage d'un engin de travail destiné à passer sur ces ordures pour les tasser.

2. Dispositif selon la revendication 1, caractérisé en ce que la tuyauterie formant drain est portée par au moins deux supports (11, 18; 111, 118) dont l'un au moins (11, 111) est porté par une semelle (3) disposée sur ou à l'intérieur du tas d'ordures et accompagnant ce dernier dans son affaissement.

3. Dispositif selon la revendication 2, caractérisé en ce qu'il comporte un élément poutre (17, 117) porté au moins par lesdits deux supports (11, 18; 111, 118) répartis dans sa longueur et solidaires chacun de moyens d'attache (23, 24, 25; 124, 125) maintenant au moins partiellement ladite poutre (17, 117) en niveau par rapport auxdits supports (11, 18; 111, 118), ladite poutre (17, 117) portant, sur au moins une partie de sa longueur entre lesdits supports (11, 18; 111, 118) la tuyauterie (16, 116) d'évacuation, les moyens d'attache (23, 24, 25; 123, 124, 125) autorisant un déplacement angulaire de ladite poutre (17, 117) par rapport auxdits supports (11, 18; 111, 118), ainsi qu'un coulissement axial de ladite poutre (17, 117) par rapport à au moins l'un desdits supports (11, 18; 111, 118).

4. Dispositif selon la revendication 3, caractérisé en ce que les moyens d'attache (23, 24, 25; 123, 124, 125) associés à un support (11, 18; 111, 118) comportent au moins une poulie (24, 124) portant tangentiellement ladite poutre (17, 117).

5. Dispositif selon la revendication 4, caractérisé en ce que les moyens d'attache (23, 24, 25; 123, 124, 125) associés à un support (11, 18; 111, 118) monté sur le bord de la fosse comportent deux poulies (24, 25; 124, 125) d'axes sensiblement parallèles et entre lesquelles est passée une poutre (17, 117), ladite poutre (17, 117) étant tangentiellement en contact avec chacune de ces poulies (24, 25; 124, 125), celle de ces deux poulies qui est au-dessus de l'autre pouvant coulisser le long du support, autorisant ainsi la libre pente de la poulie, les moyens d'attache associés à un support porté par une semelle accompagnant le tas d'ordures dans son affaissement comportant uniquement une poulie portant tangentiellement ladite poutre.

6. Dispositif selon l'une des revendications 3 à 5, caractérisé en ce que les moyens d'attache (23, 24, 25; 123, 124, 125) autorisent un coulissement axial de la poutre (17, 117) par rapport à chacun desdits supports (11, 18; 111, 118).

7. Dispositif selon la revendication 6, caractérisé en ce qu'il comporte des moyens de retenue (28, 29; 151, 152) destinés à limiter ou empêcher le coulissement axial de la poutre (17, 117) par rapport aux deux supports (11, 18; 111, 118) sous l'effet de son propre poids et/ou à limiter la flèche de la poutre (17, 117).

8. Dispositif selon la revendication 7, caractérisé en ce que les moyens de retenue (28, 29; 151, 152) comportent un câble (28, 152), en tension entre les deux supports (11, 18; 111, 118) et au moins un organe de liaison (29, 30; 150, 151) solidaire de la poutre (17, 117), ledit câble (28, 152) étant retenu sur au moins l'un des deux supports par un tendeur de câble

9. Dispositif selon la revendication 8, caractérisé en ce que l'organe de liaison comprend une poulie (29, 151) montée pivotante sur un étrier (30, 155) solidaire de la poutre (17, 117).

10. Dispositif selon l'une des revendications 8 ou 9, caractérisé en ce que les moyens de retenue comportent plusieurs câbles (152) associés chacun à un organe de liaison (150, 151), chaque câble (152) étant en tension entre les deux supports (111, 118) et l'organe de liaison (150, 151) auquel il est associé.

11. Dispositif selon l'une des revendications 3 à 10, caractérisé en ce que les moyens d'attache (23, 24, 25; 123, 124, 125) sont réglables en niveau par rapport au support (11, 18; 111, 118) auquel ils sont associés.

12. Dispositif selon la revendication 11, caractérisé en ce que les supports sont, sur au moins une de leurs parties (11, 18; 111, 118), des poteaux associés à des manchons (23, 123) de réglage en niveau des moyens d'attache (23, 24, 25; 123, 124, 125).

13. Dispositif selon l'une des revendications 3 à 12, caractérisé en ce que la tuyauterie (16, 116) est associée vers une de ses extrémités à un tube (15a, 115a) d'entrée de gaz relié au puits de captation et vers son autre extrémité à un tube (15b, 115b) de sortie, un tube d'entrée (15a, 115a) et/ou de sortie (15b, 115b) étant un tube souple apte à accompagner par ses déformations le mouvement éventuel de la poutre (17, 117) par rapport à ses supports (11, 18; 111, 118).

14. Dispositif selon la revendication 13, caractérisé en ce qu'un tube souple (15a, 15b; 115a, 115b) est au moins partiellement enroulé sur lui-même selon une spirale dont la hauteur peut être déformée.

15. Dispositif selon l'une des revendications 3 à 14, caractérisé en ce que la poutre (17, 117) est confondue sur tout ou partie de sa longueur, avec une tuyauterie (16, 116).

16. Dispositif selon l'une des revendications 3 à 15, caractérisé en ce que la tuyauterie (16, 116) est en polyester armé ou polyéthylène haute densité.

## Claims

1. Collection and evacuation device for fermentation gases resulting from refuse, such as domestic garbage (1, 101), disposed of by successive layers in a pit (2, 102) open and designed to this end, whereas this device comprises, inside the garbage heap, a well (6) used as a collection body of the said fermentation gases, and a pipework (17, 118) forming a drain which links the said well (6) to a gas collector (4, 104) arranged on the rim of the pit and towards which the said fermentation gases are sucked away, the said pipework (17, 117) being an overhead pipework able to accompany any possible variations of the position of the said collection well (6) with respect to the level of the said garbage heap, and being separated from the external surface of the garbage heap by sufficient a height in order to allow the passage of a machine designed to roll over this garbage in order to ram it.

2. Device according to claim 1, characterised in that the drain-forming pipework is supported by at least two brackets (11, 18; 111, 118) at least one of which (11, 111) is supported by a sole (3) arranged on or inside the garbage heap and accompanying the former in its sagging movement.

3. Device according to claim 2, characterised in that it contains a beam element (17, 117) supported at least by the said both brackets (11, 18; 111, 118) spread over its length and each connected by fastening means (23, 24, 25; 24, 125) maintaining at least partially the said beam (17, 117) on the same level with respect to the said brackets (11, 18; 111, 118), whereby the said beam (17, 117) supporting, on at least a section of its length between the said brackets (11, 18; 111, 118), the evacuation pipework (16, 116), the fastening means (23, 24, 25; 123, 124, 125) allowing angular displacement of the said beam (17, 117) with respect to the said brackets (11, 18; 111, 118), as well as axial sliding of the said beam (17, 117) with respect to at least one of the said brackets (11, 18; 111, 118).

4. Device according to claim 3, characterized in that the fastening means (23, 24, 25; 123, 124, 125) associated to a bracket (11, 18; 111, 118) comprise at least one pulley (24, 124) carrying the said beam (17, 117) tangentially.

5. Device according to claim 4, characterized in that the fastening means (23, 24, 25; 123, 124, 125) associated with a bracket (11, 18; 111, 118) mounted on the rim of the pit exhibit two pulleys (24, 25; 124, 125) whose axes are substantially parallel and between which lies a beam (17, 117), the said beam (17, 117) being in tangential contact with each of these pulleys (24, 25; 124, 125), the one of both these pulleys which lies above the other can slide along the bracket, thus allowing free slope of the pulley, whereby the fastening means associated with a bracket supported by a sole accompanying the garbage heap in its sagging movement solely comprise a pulley which support the said beam tangentially.

6. Device according to one of claims 3 to 5, characterized in that the fastening means (23, 24, 25; 123, 124, 125) allow axial sliding of the beam (17, 117) with respect to each one of the said brackets (11, 18; 111, 118).

7. Device according to claim 6, characterised in that it exhibits fastening means (28, 29; 151, 152) designed to limit or prevent axial sliding of the beam (17, 117) with respect to both brackets (11, 18; 111, 118) under the effect of its own weight and/or to limit the deflection of the beam (17, 117).

8. Device according to claim 7, characterized in that the fastening means (28, 29; 151, 152) comprise a cable (28, 152), tightened between both brackets (11, 18; 111, 118) and at least one linking member (29, 30; 150, 151) connected to the beam (17, 117), whereby the said cable (28, 152) is maintained on at least one of both brackets by a cable tightener.

9. Device according to claim 8, characterized in that the linking member comprises a pulley (29, 151) pivot-mounted on a stirrup (30, 155) connected to the beam (17, 117).

10. Device according to claim 8 or 9,
characterized in that the fastening means comprise several cables (152) each associated with a linking member (150, 151), whereby each cable (152) is tightened between both brackets (111, 118) and the linking member (150, 151) with which it is associated.

11. Device according to one of claims 3 to 10, characterized in that the level of the fastening means (23, 24, 25; 123, 124, 125) is adjustable with respect to the bracket (11, 18; 111, 118) with which they are associated.

12. Device according to claim 11, characterized in that the brackets are, on at least one of their sections (11, 18; 111, 118) , stands associated with sleeves (23, 123) for level adjustment of the fastening means (23, 24, 25; 123, 124, 15).

13. Device according to one of claims 3 to 12, characterized in that the pipework (16, 116) is associated with one of its ends to a gas input tube (15a, 115a) linked to the collection well and towards its other end to an output tube (15b, 115b), an input (15a, 115a) and/or output (15b, 115b) tube being a flexible tube, able to accompany by its deformations, the possible movement of the beam (17, 117) with respect to its brackets (11, 18; 111, 118).

14. Device according to claim 13, characterized in that a flexible tube (15a, 15b; 115a, 115b) is at least partially rolled up over itself according to a spiral whose height can be deformed.

15. Device according to one of claims 3 to 14, characterized in that the beam (17, 117) takes the form of a pipework (16, 116) over its length, in all or in part.

16. Device according to one of claims 3 to 15, characterized in that the pipework (16, 116) is made of armoured polyester or high density polyethylene.

## Patentansprüche

1. Vorrichtung zum Sammeln und Abführen von Gärungsgasen, die aus Abfällen wie Hausmüll (1, 101) austreten, der in aufeinanderfolgenden Schichten in einer zu diesem Zweck vorgesehenen offenen Müllgrube (2, 102) deponiert ist, wobei diese Vorrichtung mitten in dem Müllhaufen einen Schacht (6), der als Sammelorgan der Gärungsgase dient, und ein Rohrsystem (17,118) aufweist, welches einen Abzug bildet, welcher den Schacht (6) mit einem Gassammler (4,104) verbindet, der an dem Rand der Müllgrube angeordnet ist und zu dem hin die Gärungsgase angesaugt werden, wobei das Rohrsystem (17,117) ein oberirdisches Rohrsystem ist, das geeignet ist, eventuellen Lageänderungen des Sammelschachts (6) bezüglich des Niveaus des Müllhaufens zu folgen und das von der äußeren Oberfläche des Müllhaufens durch eine ausreichende Höhe getrennt ist, um den Durchgang eines Arbeitsgeräts zu gestatten, welches dazu bestimmt ist, über den Müll hinwegzugehen, um ihn zu verfestigen.

2. Vorrichtung nach Anspruch 1,
**dadurch gekennzeichnet**,
daß das den Abzug bildende Rohrsystem von wenigstens zwei Stützen (11,18; 111,118) getragen wird, von denen wenigstens eine (11,111) von einer Sohle (3) getragen wird, die auf oder im Inneren des Müllhaufens angeordnet ist und letzteren bei seinem Absenken begleitet.

3. Vorrichtung nach Anspruch 2,
**dadurch gekennzeichnet**,
daß sie ein Trägerelement (17,117) umfaßt, welches zumindest von den beiden Stützen (11,18; 111,118) getragen wird, die über seine Länge verteilt sind und von denen jede mit Befestigungsmitteln (23,24,25; 124,125) verbunden ist, welche den Träger (17,117) zumindest teilweise auf Höhe zu den Stützen (11,18; 111,118) halten, wobei der Träger (17,117) wenigstens auf einem Abschnitt seiner Länge zwischen den Stützen (11,18; 111,118) das Abführrohrsystem (16,116) trägt, wobei die Befestigungsmittel (23,24,25; 123,124,125) eine Winkeländerung des Trägers (17,117) bezüglich der Stützen (11,18; 111,118) ebenso wie eine axiale Verschiebung des Trägers (17,117) bezüglich wenigstens einer der Stützen (11,18; 111,118) gestatten.

4. Vorrichtung nach Anspruch 3,
**dadurch gekennzeichnet**,
daß die Befestigungsmittel (23,24,25; 123,124,125), die mit einer Stütze (11,18; 111,118) verbunden sind, wenigstens eine Rolle (24,124) umfassen, welche den Träger (17,117) tangential trägt.

5. Vorrichtung nach Anspruch 4,
**dadurch gekennzeichnet**,
daß die Befestigungsmittel (23,24,25; 123,124,125), die mit einer Stütze verbunden sind (11,18; 111,118), die an dem Rand der Müllgrube errichtet ist, zwei Rollen (24,25; 124,125) umfassen, deren Achsen im wesentlichen parallel liegen und zwischen denen ein Träger (17,117) durchgeführt ist, wobei der Träger (17,117) tangential mit jeder dieser Rollen (24,25; 124,125) in Berührung steht, wobei diejenige dieser beiden Rollen, die sich oberhalb der anderen Rolle befindet, entlang der Stütze gleiten kann und so die freie Neigung der Rolle gestattet, wobei die Befestigungsmittel,die mit einer Stütze verbunden sind, die von einer Sohle getragen wird, welche den Müllhaufen in seiner Absenkung begleitet, nur eine Rolle aufweist, welche den Träger tangential trägt.

6. Anordnung nach einem der Ansprüche 3 - 5,
**dadurch gekennzeichnet**,
daß die Befestigungsmittel (23,24,25; 123,124,125) ein axiales Gleiten des Trägers (17,117) bezüglich jeder der Stützen (11,18; 111,118) gestatten.

7. Vorrichtung nach Anspruch 6,
**dadurch gekennzeichnet**,
daß sie Rückhaltemittel (28,29; 151,152) umfaßt, welche dazu bestimmt sind, die axiale Verschiebung des Trägers (17,117) bezüglich der beiden Stützen (11,18; 111,118) unter der Wirkung seines eigenen Gewichts zu begrenzen oder zu verhindern und/oder die Biegung des Trägers (17,117) zu begrenzen.

8. Vorrichtung nach Anspruch 7,
**dadurch gekennzeichnet**,
daß die Rückhaltemittel (28,29; 151,152) ein zwischen den beiden Stützen (11,18; 111,118) gespanntes Seil (28,152) und wenigstens ein Verbindungsorgan (29,30; 150,151) umfassen, welches mit dem Träger (17,117) verbunden ist, wobei das Seil (28,152) an wenigstens einer der beiden Stützen durch einen Seilspanner zurückgehalten ist.

9. Vorrichtung nach Anspruch 8,
**dadurch gekennzeichnet**,
daß das Verbindungsorgan eine Rolle (29,151) umfaßt, die schwenkbar an einem mit der Rolle (17,117) verbundenen Bügel (30,155) angebracht ist.

10. Vorrichtung nach einem der Ansprüche 8 oder 9,
**dadurch gekennzeichnet**,
daß die Rückhaltemittel mehrere Seile (152) umfassen, von denen jedes mit einer Verbindung (150,151) verbunden ist, wobei jedes Seil (152) zwischen die beiden Stützen (111,118) und der Verbindung (150,151) gespannt ist, mit der es verbunden ist.

11. Vorrichtung nach einem der Ansprüche 3 - 10,
**dadurch gekennzeichnet**,
daß die Befestigungsmittel (23,24,25; 123,124,125) in ihrer Höhe bezüglich der Stütze (11,18; 111,118), mit der sie verbunden sind, einstellbar sind.

12. Vorrichtung nach Anspruch 11,
**dadurch gekennzeichnet**,
daß die Stützen an wenigstens einem ihrer Abschnitte (11,18; 111,118) Pfosten sind, die mit Muffen (23,123) zur Höhenregelung der Befestigungsmittel (23,24,25; 123,124,125) verbunden sind.

13. Vorrichtung nach einem der Ansprüche 3 - 12,
**dadurch gekennzeichnet**,
daß das Rohrsystem (16,116) an einem seiner Enden mit einem Gaseinlaßrohr (15a,115a) verbunden ist, welches mit dem Sammelschacht in Verbindung steht, und an seinem anderen Ende mit einem Auslaßrohr (15b,115b), wobei ein Einlaßrohr (15a,115a) und/oder Auslaßrohr (15b,115b) ein biegsames Rohr ist, welches geeignet ist, durch seine Verformung der eventuellen Bewegung des Trägers (17,117) bezüglich seiner Stützen (11,18; 111,118) zu folgen.

14. Vorrichtung nach Anspruch 13,
**dadurch gekennzeichnet**,
daß ein biegsames Rohr (15a,15b; 115a,115b) wenigstens teilweise in sich selbst als Spirale gewickelt ist, deren Höhe verformt werden kann.

15. Vorrichtung nach einem der Ansprüche 3 - 14,
**dadurch gekennzeichnet**,
daß der Träger (17,117) über seine ganze Länge oder über einen Teil seiner Länge mit einem Rohrsystem (16,116) vereinigt ist.

16. Vorrichtung nach einem der Ansprüche 3 - 15,
**dadurch gekennzeichnet**,
daß das Rohrsystem (16,116) aus verstärktem Polyester oder Polyäthylen hoher Dichte besteht.
